# EUROPÄISCHE PATENTANMELDUNG

(11) **EP 2 759 823 A2**
(43) Veröffentlichungstag der Anmeldung: **30.07.2014**
(21) Anmeldenummer: 14151210.3
(22) Anmeldetag: 15.01.2014
(51) Int. Cl.: G01M 3/32, A62C 13/76, A62C 37/50

(54) **Druckgasbehälter**

(30) Priorität: 25.01.2013 DE 102013201202
(71) Anmelder: Siemens Aktiengesellschaft, 80333 München (DE)
(72) Erfinder: Krug, Volker, 61231 Bad Nauheim (DE)

(57) **Zusammenfassung**

Verfahren und Anordnung zur Überwachung des Druckes eines Gases in einem Behälter, wobei durch eine Druckmesseinrichtung eine permanente Erfassung des Gasdruckes im Behälter erfolgt, wobei durch eine Temperaturmesseinrichtung die Bestimmung der Temperatur des Gases im Behälter durch eine direkte oder eine indirekte Messung erfolgt, wobei ein Steuerungsgerät (Z.B. Mikroprozessor) zum Vergleichen eines aktuellen temperaturkompensierten Gasdruckes im Behälter mit einer Referenzkennlinie verwendet wird. Der temperaturkompensierte Gasdruck basiert auf der aktuellen Temperatur des Gases im Behälter und spezifischen Kenngrössen des Gases. Die Referenzkennlinie für den Behälter wird gebildet aus spezifischen Kenngrössen des Gases hinsichtlich Temperatur und Druck. Dies ermöglicht eine verlässliche Schwunderkennung des Mediums im Behälter. Optional können das Verfahren und/oder die Anordnung mit einem Gebäudeleitsystem wirkmässig gekoppelt sein oder in einem Gebäudeleitsystem integriert sein

## Beschreibung

Die vorliegende Erfindung betrifft ein Verfahren und eine Anordnung zur Überwachung des Druckes eines Gases in einem Behälter.

Es ist aus dem Stand der Technik bekannt, zur Speicherung von flüssigen oder gasförmigen Medien Druckbehälter zu verwenden. Druckbehälter werden u.a. auch für Feuerlöscher oder in Feuerlöschanlagen (z.B. für öffentliche Gebäuden, wie z.B. Flughäfen) zur Brandbekämpfung eingesetzt.

Insbesondere bei Druckgasbehältern und bei der Verwendung in Feuerlöschanlagen ist es wichtig, dass das zur Brandbekämpfung vorgesehene Medium (z.B. Argon, Stickstoff) vollständig im Druckbehälter zur Verfügung steht.

Um Schwund des Mediums im Druckbehälter zu erkennen, kann z.B. eine Wägung des Druckbehälters durchgeführt werden. Voraussetzung dafür ist allerdings, dass die Wiegung mit einer sehr hohen Genauigkeit erfolgt. Aber Störgrössen, wie Vibrationen im Gebäude, machen es nahezu unmöglich verlässliche Daten für eine exakte Auswertung der Wiegedaten für eine Schwunderkennung zu erhalten.

Auch die Schwunderkennung mittels Kontaktmanometer liefert keine ausreichende Genauigkeit, da bei dieser Art der Messung die jeweils am Aufstellungsort des Druckbehälters herrschenden Raumtemperaturen nicht berücksichtigt werden.

Es ist Aufgabe der vorliegenden Erfindung, ein Verfahren und eine Anordnung zur Überwachung des Druckes eines Gases in einem Druckbehälter für eine verlässliche Schwunderkennung des im Behälter befindlichen Mediums bereitzustellen.

Die Aufgabe wird gelöst durch ein Verfahren zur Überwachung des Druckes eines Gases in einem Behälter, das Verfahren umfassend:
- Erstellen einer Referenzkennlinie für den Behälter, wobei die Referenzkennlinie aus spezifischen Kenngrössen des Gases hinsichtlich Temperatur und Druck gebildet wird;
- permanente Erfassung des Gasdruckes und der Temperatur des Gases im Behälter über geeignete Messeinrichtungen;
- Ermitteln eines temperaturkompensierten Gasdruckes basierend auf der Temperatur des Gases im Behälter und den spezifischen Kenngrössen des Gases; und
- Vergleichen des temperaturkompensierten Gasdruckes mit der Referenzkennlinie. Das Verfahren ist insbesondere geeignet zur Schwundüberwachung von Druckgasbehältern mit Löschmitteln wie z. B. mit Stickstoff, Argon, Novec1230 oder ähnlich gelagerten gasförmigen Stoffen bzw. Medien. Das Verfahren ermöglicht es durch die permanente und genaue Überwachung des Druckes in Abhängigkeit von der Raumtemperatur des Aufstellortes und eines Abgleichs mit dem Füllprotokoll bzw. einer Referenzkennlinie aus spezifischen Kenngrössen des Mediums hinsichtlich Temperatur und Druck (die Referenzkennlinie ist z.B. aus dem Füllprotokoll ableitbar) eine Leckage im Behälter frühzeitig erkennbar machen. Gerade für klimaschädigende Gase, wie FM200 oder HFC227 etc. wäre das zusätzlich von grossem Nutzen für die Umwelt. Darüber hinaus werden beim Betrieb von Löschanlagen Betriebsunterbrechungen verkürzt bzw. vermieden. Die Verfügbarkeit einer Löschanlage wird damit auf ein Maximum erhöht und es werden ausserplanmässige Serviceeinsätze auf ein vorgeschriebenes Mass reduziert.

Eine erste vorteilhafte Ausgestaltung der Erfindung liegt darin, dass die Temperatur des Gases im Behälter über die Umgebungstemperatur des Behälters erfasst wird. Die Temperatur des Mediums im Behälter kann direkt im oder am Behälter, aber vorteilhafter weise auch indirekt über die Raumtemperatur oder die Temperatur des Aufstellungsortes bzw. des Aufstellbereiches des Behälters erfasst werden. Somit ist es möglich mit einer Messeinrichtung (z.B. ein Thermometer) die Temperatur mehrerer Behälter in einem Raum bzw. an einem Ort zu bestimmen. Bei der Temperaturbestimmung der Behältertemperatur über die Raum- oder Ortstemperatur muss noch eine jeweils vorliegende Zeitverzögerung (z.B. durch eine Zeitverzögerungskonstante) berücksichtigt werden.

Eine weitere vorteilhafte Ausgestaltung der Erfindung liegt darin, dass durch das Vergleichen des temperaturkompensierten Gasdruckes mit der Referenzkennlinie eine Schwundüberwachung des im Behälter befindlichen Gases erfolgt. Der Druck des Mediums (Gases) im Behälter ist abhängig von der jeweils vor Ort herrschenden Raum- bzw. Ortstemperatur. D.h. bei niedrigen Temperaturen (ca. -15°C / Behälterdruck ca. 270 bar) im Aufstellungsbereich der Behälter erfolgt eine Schwundmeldung, obwohl überhaupt kein Gas aus den Behältern ausgetreten ist. Im Umkehrschluss wird nicht oder zu spät eine Leckage bei höheren Raumtemperaturen (ca. 30°C / 315 bar ->Meldung bei 270 bar) erkannt. Durch Bestimmung des temperaturkompensierten Gasdruckes bezüglich des Aufstellungsortes wird eine verlässliche Schwundüberwachung sichergestellt. Somit lassen sich auch kleinste Leckagen z.B. von Treibhausgasen erkennen. Eine weitere vorteilhafte Ausgestaltung der Erfindung liegt darin, dass durch das Verfahren eine Druckausgleichsklappe und/oder eine Druckausgleichseinrichtung in einem zu schützenden Raum gesteuert wird. Somit ergibt sich als weitere Anwendungsmöglichkeit der der vorliegenden Erfindung die sichere Steuerung von Druckausgleichsklappen und der damit einhergehende Verzicht auf Zeitrelais während einer Löschmittelflutung. Stand heutzutage sind einfache Zeitrelais oder softwaregesteuerte Zeitmodule für das Schliessen der Druckausgleichsklappen, ohne Berücksichtigung des Restdruckes in den Behältern. Zu früh geschlossene Druckausgleichsklappen können zu erheblichen Gebäude- und Personenschäden führen.

Die Aufgabe wird weiterhin gelöst durch ein Verfahren zur Überwachung des Behälterdrucks in einem Druckgasbehälter auf eine unzulässige Unterschreitung hin, insbesondere aufgrund von Schwund,
- wobei ein Befüllungsdruckwert und ein Befüllungstemperaturwert eines neu befüllten Druckgasbehälters erfasst werden,
- wobei nach der Befüllung fortlaufend ein Behälterdruckwert sowie ein Druckgastemperaturwert erfasst werden, und
- wobei bei der Überwachung des Behälterdrucks auf die unzulässige Unterschreitung hin dessen Abhängigkeit von der aktuellen Druckgastemperatur mitberücksichtigt wird.

Die Mitberücksichtigung der aktuellen Druckgastemperatur erfolgt durch eine Temperaturkompensation des erfassten Behälterdruckwerts oder durch eine Temperaturkompensation der unzulässigen Unterschreitung, d.h. durch eine Temperaturkompensation einer unzulässigen Abweichung von einem vorgegebenen Druckwert. Die Überwachung des Behälterdrucks erfolgt durch ein geeignetes Steuerungsgerät, z.B. einen Mikroprozessor. Die Aufgabe wird weiterhin gelöst durch eine Anordnung zur Überwachung des Druckes eines Gases in einem Behälter, die Anordnung umfassend:
- eine Druckmesseinrichtung zur permanenten Erfassung des Gasdruckes im Behälter;
- eine Temperaturmesseinrichtung zur Bestimmung der Temperatur des Gases im Behälter;
- ein Steuerungsgerät zum Vergleichen eines aktuellen temperaturkompensierten Gasdruckes im Behälter mit einer Referenzkennlinie, wobei der temperaturkompensierte Gasdruck basierend auf der aktuellen Temperatur des Gases im Behälter und spezifischen Kenngrössen des Gases gebildet ist, und wobei die Referenzkennlinie für den Behälter aus spezifischen Kenngrössen des Gases hinsichtlich Temperatur und Druck gebildet ist. Die Anordnung kann leicht für eine Nachrüstung für eine intelligente Leckage-Überwachung von Druckgasbehältern für bereits installierte Behälter verwendet werden, da die Anbringung des Drucksensors nachträglich erfolgen kann, ohne den oder die Behälter zu entleeren.

Eine weitere vorteilhafte Ausgestaltung der Erfindung liegt darin, dass das Steuerungsgerät durch Vergleichen des aktuellen temperaturkompensierten Gasdruckes mit der Referenzkennlinie ermittelt, ob ein Schwund des Gases im Behälter vorliegt. Somit lassen sich auch kleinste Leckagen z.B. von Treibhausgasen erkennen.

Eine weitere vorteilhafte Ausgestaltung der Erfindung liegt darin, dass die Anordnung ein oder mehrere Behälter umfasst, und wobei das Steuerungsgerät ausgelegt ist mehrere Behälter zu überwachen. Somit kann die Anordnung auch in Gebäuden (z.B. Flughäfen oder Rechenzentren) verwendet werden, die eine komplexe (grosse) Brandlöschvorrichtung erfordern.

Eine weitere vorteilhafte Ausgestaltung der Erfindung liegt darin, dass die Anordnung Teil einer Gaslöschanlage mit natürlichen Gasen und deren Gemischen oder einer Löschanlage mit chemischen Löschmitteln ist. Brandlöschvorrichtungen für Rechenzentren können somit u.a. beispielhafter weise ausgestattet werden. Mögliche Gase sind z.B. Argon, Stickstoff oder Gemische von entsprechenden Gasen).

Eine weitere vorteilhafte Ausgestaltung der Erfindung liegt darin, dass die Anordnung Teil eines Gebäudeleit- und/oder Gefahrenmeldesystems ist und insbesondere zur Brandbekämpfung verwendbar ist. Die Kopplung oder Integration der Anordnung mit einem Gebäudeleitsystem ist u.a. hinsichtlich der Lüftungstechnik vorteilhaft. Z.B. für eine zentrale Steuerung von Druckausgleichsklappen in einem Gebäude oder für eine zentrale Steuerung der Absaugung ausgetretenen Löschgases über eine Absaugeinrichtung. Optional kann die erfindungsgemässe Anordnung auch mit einer Gaswarnanlage gekoppelt sein.

Ein Ausführungsbeispiel der Erfindung ist in der Zeichnung dargestellt und wird im Folgenden erläutert.

Dabei zeigen:
- FIG 1: eine erste beispielhafte Prinzipdarstellung für die vorliegende Erfindung,
- FIG 2: eine zweite beispielhafte Prinzipdarstellung für die vorliegende Erfindung mit mehreren Behältern,
- FIG 3: eine beispielhafte Darstellung einer Kennlinie für ein beispielhaftes Medium in einem Behälter, und
- FIG 4: ein beispielhaftes Ablaufdiagramm für die vorliegende Erfindung.

Stand der Technik ist eine Schwundkontrolle mittels Kontaktmanometer mit einer Genauigkeitsklasse von 1.6. Es erfolgt eine Störmeldung bei entweichen von min. 10% des Inhaltes (Bsp. 270 bar bei einem 300 bar Behälter). Diese Meldung wird aber ohne Berücksichtigung der vor Ort herrschenden Raumtemperatur ausgelöst. D.h. bei niedrigen Temperaturen (ca. -15°C / Behälterdruck ca. 270 bar) im Aufstellungsbereich der Behälter würde eine Schwundmeldung erfolgen, obwohl überhaupt kein Gas aus den Behältern ausgetreten ist. Im Umkehrschluss wird nicht oder zu spät eine Leckage bei höheren Raumtemperaturen (ca. 30°C / 315 bar ->Meldung bei 270 bar) erkannt.

Weiterhin ist als temperaturunabhängiges Messverfahren die mechanische Wägung bekannt, d.h. Wiegen des befüllten Behälters. Hierzu muss aber die Wiegung jedes Behälters mit einer sehr hohen Genauigkeit erfolgen. Störgrössen, wie Vibrationen im Gebäude, machen es aber fast unmöglich, verlässliche Daten für eine exakte Auswertung (Wiegung) zu erhalten.

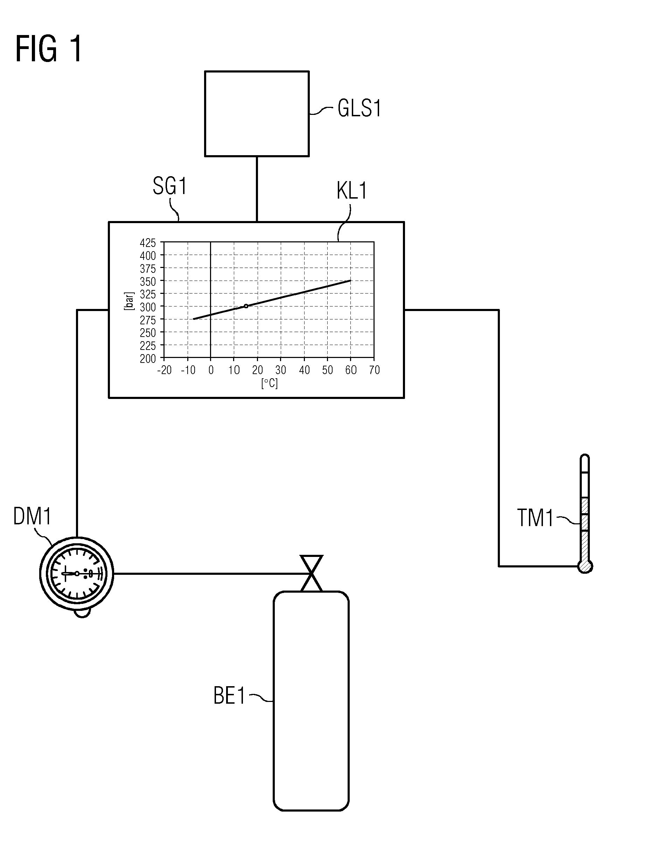

Figur 1 zeigt eine erste beispielhafte Prinzipdarstellung für die vorliegende Erfindung. Der Druck des im Gasdruckbehälter BE1 befindlichen Mediums (z.B. Löschmittel) wird durch eine Druckmesseinrichtung DM1 (z.B. ein am Behälter BE1 angebrachtes Manometer) permanent erfasst und an ein Steuerungsgerät SG1 (z.B. Computer oder Mikroprozessor) online oder zu bestimmten definierten Zeitpunkten (z.B. in einem Batch-Betrieb jede Stunde oder den jeweiligen vorliegenden Anforderungen entsprechenden Zeitabschnitten) weitergeleitet. Über eine Temperaturmesseinrichtung TM1 (z.B. Thermometer) wird permanent die Temperatur des Mediums im Behälter BE1 erfasst und online oder ebenfalls zu bestimmten definierten Zeitpunkten (z.B. in einem Batch-Betrieb jede Stunde oder den jeweiligen vorliegenden Anforderungen entsprechenden Zeitabschnitten) an das Steuerungsgerät SG1 weitergeleitet. Die Temperatur kann dabei direkt am Behälter abgegriffen werden oder aber auch indirekt über die Temperatur am Aufstellungsort des Behälters BE1, z.B. über ein Thermometer, dass die Raumtemperatur am Aufstellungsort erfasst. Bei indirekter Temperaturbestimmung müssen natürlich jeweils vorliegende Zeitverzögerungskonstanten in Abhängigkeit des Mediums und der am Aufstellungsort herrschenden Bedingungen (z.B. atmosphärische Einflüsse, Luftdruck etc.) berücksichtigt werden.

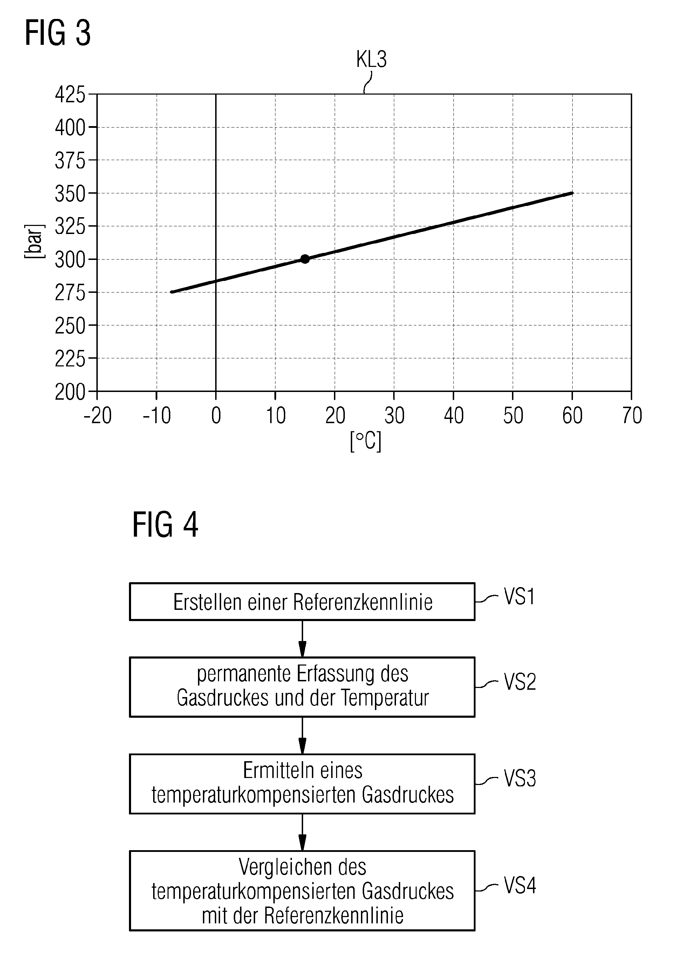

Im Steuerungsgerät SG1 (z.B. handelsüblicher Computer oder Mikroprozessor mit entsprechender Software bestückt) wird ein temperaturkompensierter Gasdruck basierend auf der aktuellen Temperatur des Gases im Behälter BE1 und den spezifischen Kenngrössen des Gases bzw. Mediums erstellt. Die spezifischen Kenngrössen des Gases bzw. des Mediums können u.a. aus dem jeweiligen Füllprotokoll für den Behälter BE1 entnommen werden. Weiterhin erfolgt im Steuerungsgerät SG1 ein Vergleichen des temperaturkompensierten Gasdruckes mit der zugrunde liegenden Referenzkennlinie KL1 des Gases bzw. des Mediums. Die Referenzkennlinie KL1 stellt eine spezifische Charakteristik des Gases bzw. des Mediums dar. Sie wird aus spezifischen Kenngrössen des Gases bzw. des Mediums hinsichtlich Temperatur und Druck gebildet (s. Figur 3).

Mit Vorteil ist das Steuerungsgerät SG1 mit einem Gebäudeleit- und/oder Gefahrenmeldesystem GLS1 gekoppelt, insbesondere zur Brandbekämpfung, z.B. in einer Wirkkopplung mit einer Inertgaslöschanlage. Hier eignet sich z.B. Stickstoff als Medium im Behälter BE1.

Des Weiteren können durch das Steuerungsgerät SG1 Druckausgleichsklappen in einem zu schützenden Raum gesteuert werden, unter Berücksichtigung des Restdruckes im Behälter BE1. Damit wird sichergestellt, dass Druckausgleichsklappen nicht zu früh geschlossen werden, was zu Personen- und Gebäudeschäden führen kann. Ausserdem kann auf Zeitrelais während einer Löschmittelflutung verzichtet werden. Dies erhöht die Sicherheit, denn Zeitrelais arbeiten ohne Berücksichtigung des Restdruckes in einem Behälter BE1.

Ein weiterer Vorteil liegt darin, dass das erfindungsgemässe Vorgehen ermöglicht die Menge des vorzuhaltenden Löschmittels zu reduzieren.

Laut den VdS-Richtlinien der deutschen Versicherungswirtschaft ist eine Zuschlagsmenge von 10% zur Einsatzmenge eines Löschmediums erforderlich. Durch die frühzeitige Erkennung einer Leckage (und damit einhergehenden Schwund) könnte diese Menge verringert werden oder ganz entfallen.

Mit Vorteil erfolgt eine Verknüpfung des Steuergerätes SG1 mit der Gebäudeleittechnik GLS1, insbesondere hinsichtlich der Lüftungssteuerung in einem Gebäude. Bei einer eventuell nötigen Zwangsentleerung einer oder mehrerer Behälter können die ausgetretenen Löschgase, ohne eine Gefahr für Personen zu verursachen, über bestehende Lüftungskanäle entlüftet werden. Entsprechende Meldungen könnten an zentraler Stelle GLS1 gesteuert und/oder angezeigt werden. Eine Absaugung des Gases kann über eine Absaugeinrichtung, gesteuert über eine Gaswarnanlage oder ein Gebäudeleitsystem GLS1 erfolgen. Dies ist insbesondere bei Löschanlagen mit als 50 Behältern (z.B. unter Erdgleiche, z.B. bei einer Kellerlagerung) sinnvoll.

Das erfindungsgemässe Vorgehen ermöglicht durch die permanente und genaue Überwachung des Druckes in Abhängigkeit von der Raumtemperatur und des Füllprotokolls eine Leckage frühzeitig zu erkennen. Insbesondere bei der Verwendung von klimaschädigenden Gasen, wie FM200 oder HFC227 liegt darin ein grosser Nutzen für die Umwelt.

Darüber hinaus ermöglicht das erfindungsgemässe Vorgehen Betriebsunterbrechungen z.B. in Löschanlagen zu verkürzen bzw. zu vermeiden. Die Verfügbarkeit der Löschanlage wird damit auf ein Maximum erhöht und es werden ausserplanmässige Serviceeinsätze auf ein vorgeschriebenes Mass reduziert. Das erfindungsgemässe Vorgehen ermöglicht somit auch Wartungsintervalle, z.B. für Brandlöschanlagen, zu verlängern. Mit Vorteil werden hierfür die relevanten Anlagenzustände an eine zuständige Stelle, z.B. Service Leitstelle der Siemens AG oder eines anderen zuständigen Service Provider, gemeldet.

Eine Nachrüstung von Druckgasbehältern für bereits installierte Behälter BE1 ist problemlos machbar, da die Anbringung des Drucksensors DM1 nachträglich erfolgen kann, ohne den oder die Behälter zu entleeren. Auch die Herstellung einer Verbindung eines Drucksensors DM1 bzw. der Temperaturmesseinrichtung TM1 mit dem Steuergerät SG1 ist sehr einfach nachträglich möglich. Mit Vorteil werden die Verbindungen drahtgebunden oder auch drahtlos über Funk bzw.- WLAN eingerichtet.

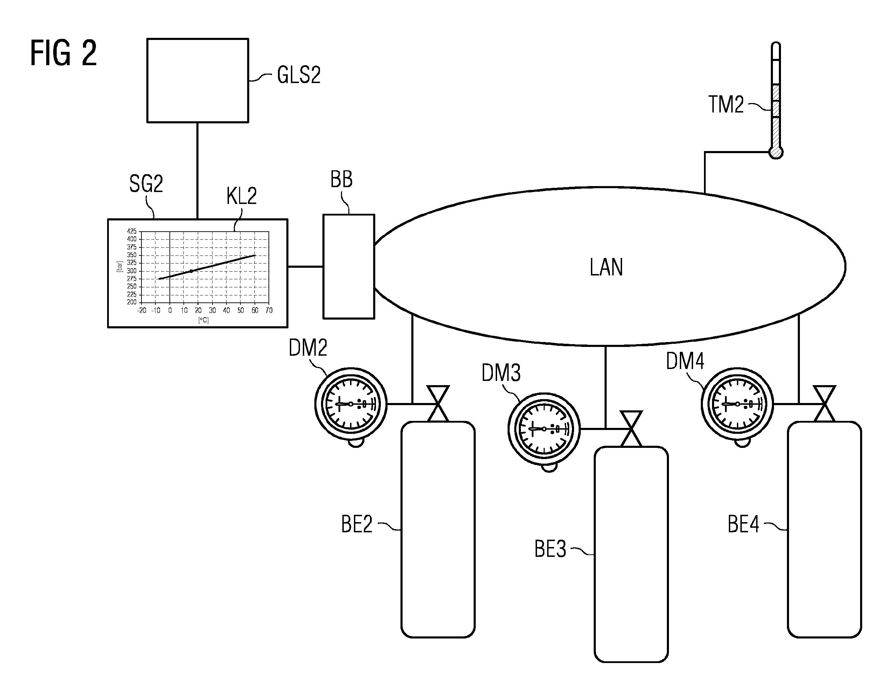

Figur 2 zeigt eine zweite beispielhafte Prinzipdarstellung für die vorliegende Erfindung mit mehreren Behältern BE2 - BE4. Die Behälter BE2 - BE4 sind z.B. mit einem Löschgas (Argon, Stickstoff etc.) gefüllt. Jeder Behälter BE2 - BE4 ist mit einem Drucksensor DM2 - DM4 ausgestattet. Die Behälter BE2 - BE4 sind über eine Verbindungsleitung (z.B. LAN oder WLAN) mit dem Steuergerät SG2 verbunden.

In der Darstellung gemäss Figur 2 wird die Temperatur des Gases in den Behältern BE2 - BE4 indirekt über ein Temperaturmessgerät TM2 (z.B. Thermometer) erfasst. Das Temperaturmessgerät TM2 liefert permanent oder in definierten zeitlichen Abständen gewonnene Temperaturdaten an das Steuergerät SG2. Dies kann über eine eigene Verbindung zum Steuergerät SG2 erfolgen. Es kann aber auch die Verbindungsleitung verwendet werden mit denen die Behälter BE2 - BE4 mit dem Steuergerät SG2 kommunizieren.

Die Bestimmung der Temperatur des Gases über die Temperatur des Aufstellungsortes der Behälter BE2 - BE4 erfordert weniger Verkabelungs- oder Datenübertragungsaufwand. Allerdings muss über geeignete Funktionen von der Raumtemperatur erst auf die Gastemperatur geschlossen werden, z.B. über Zeitverzögerungskonstanten. Die Bestimmung der Temperatur des Gases in den Behältern kann, bei entsprechend vorliegender Intelligenz im Temperaturmessgerät TM2 (z.B. durch einen embedded Mikrocontroller) erfolgen, oder im Steuergerät SG2.

Die Aufnahme des jeweiligen Druckes erfolgt über einen vorzugsweise elektrischen Ausgang der Drucksensoren DM2 - DM4 an jedem einzelnen Druckbehälter der Behälterbatterie BE2 - BE4. Die Ausgabe des jeweiligen von den Drucksensoren DM2 DM4 erfassten Druckwerts kann am jeweiligen Ausgang als analoges oder als digitales Signal ausgegeben werden. Das zentrale Steuergerät SG2 erfasst die Daten und verifiziert diese mit der Raumtemperatur im Aufstellungsbereich der Behälter BE2 - BE4 und den Daten aus den jeweiligen Füllprotokollen der Behälter BE1 - BE4. Das zentrale Steuergerät SG2 ermittelt dabei einen temperaturkompensierten Gasdruck basierend auf der aktuellen Temperatur des Gases im Behälter und spezifischen Kenngrössen des Gases und vergleicht den aktuellen temperaturkompensierten Gasdruckes im Behälter mit den entsprechenden Referenzkennlinie KL2 der Behälter BE2 - BE4.

Abweichungen von den hinterlegten Kennlinien KL2 weisen auf Leckagen und somit Schwund des Mediums hin und führen mit Vorteil zu Warnmeldungen, die intern an der Löschanlage ausgegeben werden können (z.B. durch eine Textmeldung auf einem Display oder durch einen Warnton).

Es ist aber auch möglich, dass das Steuergerät SG2 mit einem Gebäudeleitsystem GLS2 verbunden ist (z.B. über einen Fernzugriff, Internet etc.). Bei dieser Ausgestaltung werden im Gebäudeleitsystem GLS2 bei Schwund entsprechende Warnmeldungen ausgegeben.

Das erfindungsgemässe Vorgehen ermöglicht so z.B. die frühzeitige und verlässliche Erkennung von Leckagen und Schwund des Löschmediums in einer Brandlöschanlage und das zu einem Zeitpunkt bei dem das Kriterium für eine Störmeldung noch nicht erreicht worden ist.

Optional kann eine sogenannte Black Box BB verwendet werden, die alle von den Behältern BE2 - BE4 gelieferten Gasdruckdaten, sowie die vom Temperaturmessgerät TM2 gelieferten Temperaturdaten aufzeichnet und zwischen speichert (z.B. für einen Tag oder eine Woche).

Figur 3 zeigt eine beispielhafte Darstellung einer Referenzkennlinie KL3 für ein beispielhaftes Medium in einem Druckbehälter. Die Kennlinie KL3 stellt eine charakteristische Eigenschaft (z.B. welcher Druck herrscht bei einer bestimmten Temperatur) für ein beispielhaftes Medium dar. Die Darstellung gemäss Figur 3 zeigt ein Diagramm mit einer Geraden als Referenzkennlinie für ein Medium (z.B. Löschgas) in der Abszissenachse ist dabei die Temperatur aufgetragen (in Celsius), auf der Ordinatenachse der jeweils zu einer Temperatur zugehörige Druck (in bar). Der erfindungsgemässe temperaturkompensierte Vergleich des aktuell gemessenen Druckes mit der jeweiligen Kennlinie KL3 ermöglicht ein schnelles und verlässliches Erkennen von Gasschwund in einem Behälter. Mit Vorteil erfolgt dieser Vergleich computerunterstützt, z.B. durch Verwendung von Tabellenkalkulationsprogrammen (Spreadsheets).

Figur 4 zeigt ein beispielhaftes Ablaufdiagramm für die Durchführung der vorliegenden Erfindung. Die Darstellung gemäss Figur 4 zeigt ein Verfahren zur Überwachung des Druckes eines Gases (z.B. Argon, Stickstoff, Novec1230) in einem Behälter. Das Verfahren umfasst folgende Verfahrensschritte:
- Erstellen einer Referenzkennlinie für den Behälter, wobei die Referenzkennlinie aus spezifischen Kenngrössen des Gases hinsichtlich Temperatur und Druck gebildet wird (VS1);
- permanente Erfassung des Gasdruckes und der Temperatur des Gases im Behälter über geeignete Messeinrichtungen (VS2);
- Ermitteln eines temperaturkompensierten Gasdruckes basierend auf der Temperatur des Gases im Behälter und den spezifischen Kenngrössen des Gases (VS3); und
- Vergleichen des temperaturkompensierten Gasdruckes mit der Referenzkennlinie (VS4). Dabei kann die Temperatur des Gases im Behälter über die Umgebungstemperatur des Behälters indirekt erfasst werden oder aber auch direkt am bzw. im Behälter über entsprechende Sensorik abgegriffen werden.

Durch das Vergleichen des temperaturkompensierten Gasdruckes mit der Referenzkennlinie erfolgt eine Schwundüberwachung des im Behälter befindlichen Gases.

Die Referenzkennlinie stellt eine charakteristische Eigenschaft des jeweiligen Mediums im Behälter dar. Die Referenzkennlinie kann z.B. über ein Tabellenkalkulationsprogramm abgebildet und mit den aktuellen Druckmessungen von den Behältern verglichen werden.

Das Ermitteln des temperaturkompensierten Gasdruckes und das Vergleichen des temperaturkompensierten Gasdruckes mit der Referenzkennlinie erfolgt mit Vorteil computerunterstützt in einem Steuergerät (z.B. handelsüblicher PC mit entsprechender Software).

Die vorliegende Erfindung ist u.a. geeignet für die Schwundüberwachung von Löschmittelbehältern mit Stickstoff, Argon, Novec1230 oder ähnlichen gasförmig gelagerten Stoffen. Die Aufnahme des Fülldruckes erfolgt z.B. über einen elektrischen Ausgang am Druckbehälter oder bei einer Behälterbatterie an jedem einzelnen Druckbehälter. Eine Zentraleinheit (Computer, Steuergerät) erfasst die Daten und wertet diese, unter Einbeziehung der Raumtemperatur, aus, speichert diese und stellt sie für weitere Nutzungen z. Bsp. online zur Verfügung (z.B. für eine Weiterverarbeitung in einem Gebäudeleitsystem).

Die vorliegende Erfindung ermöglicht durch die permanente, exakte Überwachung des Druckes eine Leckage frühzeitig erkennbar zu machen. Die Verfügbarkeit der Löschanlage selbst wird damit erheblich erhöht. Zusatzkosten für ausserplanmässige Serviceeinsätze reduzieren sich auf ein Minimum. Betroffene (undichte) Behälter können im Rahmen der Wartungsarbeiten ausgetauscht werden. Darüber hinaus werden Betriebsunterbrechungen verkürzt bis nahezu unterbunden.

Insbesondere bei klimaschädigenden Gasen, wie z. Bsp. FM200, HFC227 etc. ist es von grosser Bedeutung kleinste Undichtigkeiten an Behältern zu erfassen, damit eine weitere Freisetzung schnellstmöglich unterbunden werden kann. Weitere Anwendungsmöglichkeiten der Erfindung bestehen hinsichtlich der Steuerung von Druckausgleichsklappen in zu überwachenden Räumen und Verknüpfungen zur Gebäudeleittechnik (z.B. zur Evakuierung des Gebäudes, oder hinsichtlich einer mechanischen Lüftung etc.).

Verfahren und Anordnung zur Überwachung des Druckes eines Gases in einem Behälter, wobei durch eine Druckmesseinrichtung eine permanente Erfassung des Gasdruckes im Behälter erfolgt, wobei durch eine Temperaturmesseinrichtung die Bestimmung der Temperatur des Gases im Behälter durch eine direkte oder eine indirekte Messung erfolgt, wobei ein Steuerungsgerät (Z.B. Mikroprozessor) zum Vergleichen eines aktuellen temperaturkompensierten Gasdruckes im Behälter mit einer Referenzkennlinie verwendet wird. Der temperaturkompensierte Gasdruck basiert auf der aktuellen Temperatur des Gases im Behälter und spezifischen Kenngrössen des Gases. Die Referenzkennlinie für den Behälter wird gebildet aus spezifischen Kenngrössen des Gases hinsichtlich Temperatur und Druck. Dies ermöglicht eine verlässliche Schwunderkennung des Mediums im Behälter. Optional können das Verfahren und/oder die Anordnung mit einem Gebäudeleitsystem wirkmässig gekoppelt sein oder in einem Gebäudeleitsystem integriert sein

### Bezugszeichen

- BE1 - BE4: Behälter
- TM1, TM2: Temperaturmesseinrichtung
- DM1 - DM4: Druckmesseinrichtung
- KL1 - KL3: Referenzkennlinie
- SG1, SG2: Steuerungsgerät
- GLS1, GLS2: Gebäudeleitsystem
- BB: Black Box
- LAN: Netzwerk
- VS1 - VS4: Verfahrensschritte

## Patentansprüche

1. Verfahren zur Überwachung des Druckes eines Gases in einem Behälter (BE1 - BE4), das Verfahren umfassend:
Erstellen einer Referenzkennlinie (KL1, KL2) für den Behälter (BE1 - BE4), wobei die Referenzkennlinie (KL1, KL2) aus spezifischen Kenngrössen des Gases hinsichtlich Temperatur und Druck gebildet wird;
permanente Erfassung des Gasdruckes und der Temperatur des Gases im Behälter (BE1 - BE4) über geeignete Messeinrichtungen (TM1, TM2, DM1 - DM4);
Ermitteln eines temperaturkompensierten Gasdruckes basierend auf der Temperatur des Gases im Behälter (BE1 - BE4) und den spezifischen Kenngrössen des Gases;
Vergleichen des temperaturkompensierten Gasdruckes mit der Referenzkennlinie (KL1, KL2).

2. Verfahren nach Anspruch 1, wobei die Temperatur des Gases im Behälter über die Umgebungstemperatur des Behälters (BE1 - BE4) erfasst wird.

3. Verfahren nach Anspruch 1 oder 2, wobei durch das Vergleichen des temperaturkompensierten Gasdruckes mit der Referenzkennlinie (KL1, KL2) eine Schwundüberwachung des im Behälter (BE1 - BE4) befindlichen Gases erfolgt.

4. Verfahren nach einem der vorstehenden Ansprüche, wobei durch das Verfahren eine Druckausgleichsklappe und/oder eine Druckausgleichseinrichtung in einem zu schützenden Raum gesteuert wird.

5. Verfahren zur Überwachung des Behälterdrucks in einem Druckgasbehälter (BE1 - BE4) auf eine unzulässige Unterschreitung hin, insbesondere aufgrund von Schwund,
- wobei ein Befüllungsdruckwert und ein Befüllungstemperaturwert eines neu befüllten Druckgasbehälters (BE1 - BE4) erfasst werden,
- wobei nach der Befüllung fortlaufend ein Behälterdruckwert sowie ein Druckgastemperaturwert erfasst werden, und
- wobei bei der Überwachung des Behälterdrucks auf die unzulässige Unterschreitung hin dessen Abhängigkeit von der aktuellen Druckgastemperatur mitberücksichtigt wird.

6. Anordnung zur Überwachung des Druckes eines Gases in einem Behälter (BE1 - BE4), die Anordnung umfassend:
eine Druckmesseinrichtung (DM1 - DM4) zur permanenten Erfassung des Gasdruckes im Behälter (BE1 - BE4);
eine Temperaturmesseinrichtung (TM1, TM2) zur Bestimmung der Temperatur des Gases im Behälter (BE1 - BE4);
ein Steuerungsgerät (SG1, SG2) zum Vergleichen eines aktuellen temperaturkompensierten Gasdruckes im Behälter (BE1 - BE4) mit einer Referenzkennlinie (KL1, KL2), wobei der temperaturkompensierte Gasdruck basierend auf der aktuellen Temperatur des Gases im Behälter (BE1 - BE4) und spezifischen Kenngrössen des Gases gebildet ist, und wobei die Referenzkennlinie (KL1, KL2) für den Behälter (BE1 - BE4) aus spezifischen Kenngrössen des Gases hinsichtlich Temperatur und Druck gebildet ist.

7. Anordnung nach Anspruch 6, wobei das Steuerungsgerät (SG1, SG2) durch Vergleichen des aktuellen temperaturkompensierten Gasdruckes mit der Referenzkennlinie (KL1, KL2) ermittelt, ob ein Schwund des Gases im Behälter (BE1 - BE4) vorliegt.

8. Anordnung nach einem der Ansprüche 6 bis 7, wobei die Anordnung ein oder mehrere Behälter (BE1 - BE4) umfasst, und wobei das Steuerungsgerät (SG1, SG2) ausgelegt ist mehrere Behälter (BE1 - BE4) zu überwachen.

9. Anordnung nach einem der Ansprüche 6 bis 8, wobei die Anordnung Teil einer Gaslöschanlage mit natürlichen Gasen und deren Gemischen oder einer Löschanlage mit chemischen Löschmitteln ist.

10. Anordnung nach einem der Ansprüche 6 bis 9, wobei die Anordnung Teil eines Gebäudeleit- und/oder Gefahrenmeldesystems (GLS1, GLS2) ist und insbesondere zur Brandbekämpfung verwendbar ist.
